# EUROPÄISCHE PATENTSCHRIFT

(11) **EP 3 935 350 B1**
(45) Veröffentlichungstag und Bekanntmachung des Hinweises auf die Patenterteilung: **25.01.2023**
(21) Anmeldenummer: 20705191.3
(22) Anmeldetag: 14.02.2020
(51) Int. Cl.: G01F 1/84

(54) **CORIOLIS-MESSAUFNEHMER UND CORIOLIS-MESSGERÄT MIT CORIOLIS-MESSAUFNEHMER**
CORIOLIS SENSOR AND CORIOLIS MEASURING DEVICE WITH CORIOLIS SENSOR
CAPTEUR DE CORIOLIS ET DISPOSITIF DE MESURE DE CORIOLIS AVEC CAPTEUR DE CORIOLIS

(30) Priorität: 07.03.2019 DE 102019105736
(43) Veröffentlichungstag der Anmeldung: 12.01.2022
(73) Patentinhaber: Endress + Hauser Flowtec AG, 4153 Reinach (CH)
(72) Erfinder: SCHWENTER, Benjamin, 4147 Aesch (CH); WERNER, Marc, 79639 Grenzach-Wyhlen (DE); HOLLINGER, Claude, 4147 Aesch (CH); GSCHWEND, Gebhard, 4123 Allschwil (CH)
(74) Vertreter: Waselikowski, Stefan
(86) Internationale Anmeldenummer: PCT/EP2020/053827
(87) Internationale Veröffentlichungsnummer: WO 2020/178002

(56) Entgegenhaltungen:
- EP-A1- 2 078 936
- EP-A1- 3 153 827
- WO-A1-2005/073676
- WO-A1-2010/033532
- DE-A1-102015 120 087
- DE-U1- 8 712 331
- GB-A- 2 001 759
- JP-A- 2017 072 515

## Beschreibung

Die Erfindung betrifft einen Coriolis-Messaufnehmer mit einer verbesserten Sensorik bzw. verbesserter Erregereinheit und ein Coriolis-Messgerät mit einem solchen Coriolis-Messaufnehmer.

Coriolis-Messgeräte zum Messen eines Massedurchflusses oder einer Dichte eines durch ein Messrohr des Messgeräts strömenden Mediums sind Stand der Technik. Wie in der DE102015120087A1 beispielhaft gezeigt, kann ein Sensor zum Erfassen von Messrohrschwingungen bzw. ein Erreger zum Erzeugen von Messrohrschwingungen eine Planarspule und ein U-förmiges, magnetfelderzeugendes Element umfassen, welches die Planarspule umgreift.

Nachteilhaft an einem solchen magnetfelderzeugenden Element ist das Vorliegen eines Magnetfelds, welches einen unscharfen Übergang zu einem Raumbereich ohne Magnetfeld aufweist. Dies hat bei Sensoren eine geringere Empfindlichkeit zur Folge.

Die WO2005/073676A1 zeigt einen Coriolis-Messaufnehmer mit einer U-förmigen Magnethalterung, bei welcher zwei gegenüberstehende Magnete eine Einbuchtung der Magnethalterung mit einem Magnetfeld beaufschlagen.

Aufgabe der Erfindung ist es daher, einen Coriolis-Messaufnehmer sowie ein Coriolis-Messgerät vorzuschlagen, bei welchem eine höhere Empfindlichkeit der Sensoren gegeben ist.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 13.

Ein erfindungsgemäßer Coriolis-Messaufnehmer eines Coriolis-Messgeräts zum Erfassen eines Massedurchflusses oder einer Dichte eines durch mindestens ein Messrohr des Coriolis-Messgeräts strömenden Mediums umfasst:
das mindestens eine Messrohr mit einem Einlauf und einem Auslauf, welches dazu eingerichtet ist, das Medium zwischen Einlauf und Auslauf zu führen;
mindestens einen Erreger, welcher dazu eingerichtet ist, das mindestens eine Messrohr zu Schwingungen anzuregen;
mindestens zwei Sensoren, welche dazu eingerichtet sind, jeweils Schwingungen mindestens eines Messrohrs zu erfassen;
wobei mindestens ein Erreger und/oder mindestens ein Sensor jeweils eine Spulenvorrichtung mit jeweils mindestens einer Spule, sowie jeweils eine Magnetvorrichtung aufweisen, wobei die Magnetvorrichtung und die Spulenvorrichtung relativ zueinander bewegbar sind,
wobei der Messaufnehmer einen Trägerkörper aufweist, welcher dazu eingerichtet ist, das mindestens eine Messrohr zu halten,
wobei die Magnetvorrichtung eine Halterung für Magnete und zumindest eine erste Magnetgruppe mit mindestens einem Magnet und zumindest eine zweite Magnetgruppe mit mindestens einem Magnet aufweist,
wobei die Halterung eine U-Form mit einem ersten Ausleger und einem zweiten Ausleger und einer die Ausleger verbindenden Basis aufweist, wobei die Halterung die Spulenvorrichtung umgreift, so dass der erste Ausleger bzgl. eines Spulenquerschnitts auf einer ersten Seite der Spulenvorrichtung angeordnet ist, und wobei der zweite Ausleger auf einer zweiten Seite der Spulenvorrichtung angeordnet ist,
wobei die erste Magnetgruppe auf der ersten Seite der Spulenvorrichtung durch die Halterung gehalten ist, und wobei die zweite Magnetgruppe auf der zweiten Seite der Spulenvorrichtung durch die Halterung gehalten ist,
wobei die Halterung im Bereich der Ausleger jeweils einen Hohlraum aufweist, wobei die Hohlräume zur Aufnahme der Magnetgruppen eingerichtet sind,
wobei die Hohlräume jeweils durch eine Hohlraumwandung ausgebildet sind, wobei die Hohlraumwandung jeweils mindestens eine erste Öffnung zur Aufnahme einer Magnetgruppe aufweist,
wobei jede Magnetgruppe zwei Magnete und mindestens eine magnetisch leitfähige Schlussvorrichtung aufweist,
wobei die Magnetfelder der beiden Magnete entgegengesetzt orientiert sind, und wobei die Schlussvorrichtung dazu eingerichtet ist, Feldlinien der Magnetfelder beider Magnete zu leiten und zusammenzuführen,
wobei die Magnete mit der Schlussvorrichtung mechanisch kontaktiert sind,
wobei Magnetfelder sich gegenüberstehende Magnete verschiedener Magnetgruppen gleichgerichtet sind.

Dies bewirkt ein räumlich stark lokalisiertes, inhomogenes Magnetfeld, womit eine Sensorsensibilität weiter erhöht ist.

Beispielhaft ist die Halterung mittels eines 3D-Druckverfahrens hergestellt. Durch Aufnahme der Magnetgruppen in entsprechende Hohlräume unter Verzicht auf Magnetfelderzeugung durch die Halterung lässt sich bezüglich der Halterung ein räumlich gut lokalisiertes Magnetfeld herstellen, womit eine hohe Sensorsensibilität bzgl.

Messrohrschwingungen ermöglicht wird In einer Ausgestaltung sind die Magnetgruppen jeweils mittels eines Klebers im jeweiligen Hohlraum gehalten sind, wobei der Kleber insbesondere ein Keramikkleber ist.

In einer Ausgestaltung weist die Hohlraumwandung im Bereich der ersten Öffnung auf einer dem jeweiligen Hohlraum zugewandten Innenseite mindestens einen Hinterschnitt 15.53 auf, welcher Hinterschnitt dazu eingerichtet ist, einen Teil des Klebers aufzunehmen.

Nach Aushärten des Klebers ist die Magnetgruppe somit sicher fixiert und wird beispielsweise durch Messrohrschwingungen nicht delokalisiert.

In einer Ausgestaltung weist eine Wandung des Hohlraums auf einer dem jeweils anderen Ausleger zugewandte Seite des Hohlraums zumindest abschnittsweise eine erste Wandstärke auf, welche kleiner ist, als eine Wandstärke der Hohlraumwandung von anderen Hohlraumseiten, oder wobei eine Wandung des Hohlraums auf einer dem jeweils anderen Hohlraum zugewandte Seite des Hohlraums zumindest abschnittsweise eine zweite Öffnung aufweist.

Auf diese Weise kann ein magnetischer Fluss zwischen den Magnetgruppen erhöht werden.

In einer Ausgestaltung die erste Öffnung mittels eines Klappmechanismus oder Bügelmechanismus verschließbar ist,
wobei eine Klappe bzw. der Bügel ein Bestandteil der Halterung ist.

Dadurch lässt sich alternativ oder zusätzlich zur Verklebung der Magnetgruppen eine Fixierung der Magnetgruppen realisieren.

In einer Ausgestaltung weist die mindestens eine Spule einen Zentralbereich und einen den Zentralbereich umfassenden Windungsbereich auf,
wobei in einem Ruhezustand des mindestens einen Messrohrs eine Grenze zwischen den Magneten einer Magnetgruppe projiziert auf die Querschnittsebene zumindest abschnittsweise im Zentralbereich befindlich ist.

Relativbewegungen zwischen Spule und Magnetvorrichtung bewirken dadurch eine starke Induktion elektrischer Spannungen in der Spule.

Bevorzugt weist der Zentralbereich der Spule in Richtung der durch Messrohrschwingungen verursachten Relativbewegungen eine Ausdehnung auf, welche größer ist als für das Messrohr typische Schwingungsamplituden,
wobei insbesondere die Grenze zwischen den Magneten senkrecht zur Richtung der Relativbewegung verläuft,
wobei die Grenze bezüglich einer Ausdehnung des Zentralbereichs in Richtung der Relativbewegung im Ruhezustand vorteilhaft zentral angeordnet ist.

In einer Ausgestaltung weist die Hohlraumwandung auf einer der ersten Öffnung abgewandten Seite zumindest abschnittsweise eine erste geometrische Struktur auf, und wobei die Magnetgruppe eine zweite geometrische Struktur aufweist, welche zumindest abschnittsweise komplementär zur zweiten Struktur ist,
wobei die Magnetgruppe in montiertem Zustand dazu eingerichtet ist, mittels der zweiten geometrischen Struktur mit der ersten geometrischen Struktur passend abzuschließen.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer ein Messrohr auf,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper befestigt sind,
oder wobei der Messaufnehmer ein Messrohrpaar aufweist, wobei die Halterung / die Spulenvorrichtung des Sensors bzw. Erregers jeweils an einem ersten Messrohr befestigt sind, und die Spulenvorrichtung / die Halterung jeweils an einem zweiten Messrohr befestigt sind.

In einer Ausgestaltung weist der Messaufnehmer zwei Messrohrpaare auf.

In einer Ausgestaltung ist die Halterung aus mindestens einem 3D-druckbaren Metall bzw. mindestens einer Metalllegierung wie beispielsweise Stahl oder Aluminium gefertigt.

Ein erfindungsgemäßes Coriolis-Messgerät umfasst:
einen Coriolis-Messaufnehmer nach einem der vorigen Ansprüche;
eine elektronische Mess-/Betriebsschaltung, wobei die elektronische Mess-/Betriebsschaltung dazu eingerichtet ist, die Spulen und gegebenenfalls zugehörige Temperaturmessvorrichtung elektrisch zu beaufschlagen, wobei die Beaufschlagung der Spule sowie der Temperaturmessvorrichtung mittels separater elektrischer Verbindungen oder mittels eines Multiplexings bewerkstelligt ist,
wobei die mindestens eine elektrische Verbindung eines Sensors bzw. Erregers mittels einer Kabelführung zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 zeigt ein Coriolis-Messgerät 1 mit einem beispielhaften erfindungsgemäßen Coriolis-Messaufnehmer.
Fig. 2 zeigt einen Schnitt durch einen Sensor bzw. Erreger.
Fig. 3 zeigt einen Ausschnitt eines Schnitts durch eine erfindungsgemäße Halterung für Magnete mit einer Magnetgruppe.
Fig. 4 skizziert schematisch eine Anordnung einer Magnetgruppe bzgl. einer Spule im Ruhezustand eines Messrohrs.

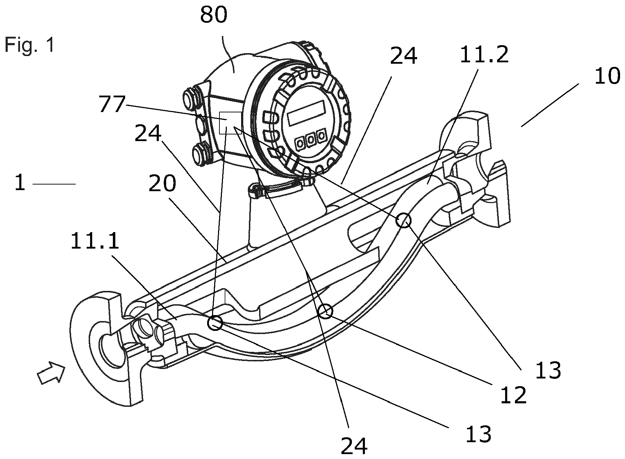

Fig. 1 zeigt ein beispielhaftes Coriolis-Messgerät 1 mit einem bespielhaften Coriolis-Messaufnehmer 10. Der Messaufnehmer umfasst einen Trägerkörper 20 und ein erstes Messrohr 11.1 und ein zweites Messrohr 11.2. Der Messaufnehmer umfasst des Weiteren einen Erreger 12 zum Erregen von Messrohrschwingungen und zwei Sensoren 13 zum Erfassen von Messrohrschwingungen. Das Coriolis-Messgerät umfasst ein Elektronikgehäuse 80, in welchem eine elektronische Mess-/Betriebsschaltung 77 angeordnet ist, welche dazu eingerichtet ist, den Erreger sowie die Sensoren zu betreiben und Messwerte bezüglich eines durch die Messrohre strömenden Mediums bereitzustellen. Der Erreger sowie die Sensoren sind mittels elektrischer Verbindungen 24 mit der elektronischen Mess-/Betriebsschaltung 77 verbunden.

Die hier gezeigte Ausgestaltung ist beispielhaft, so kann der Messaufnehmer auch nur ein Messrohr oder mehr als zwei Messrohre aufweisen.

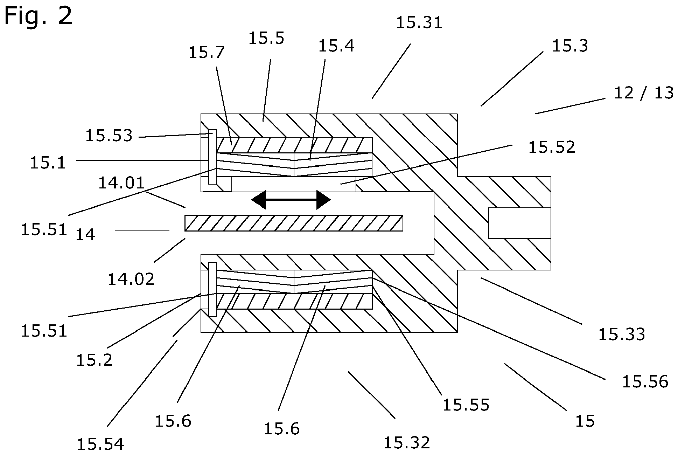

Fig. 2 zeigt einen Schnitt durch einen Erreger 12 bzw. Sensor 13 mit einer erfindungsgemäßen Halterung 15.3 für Magnete mit Magnetgruppen sowie einer Spulenvorrichtung 14.

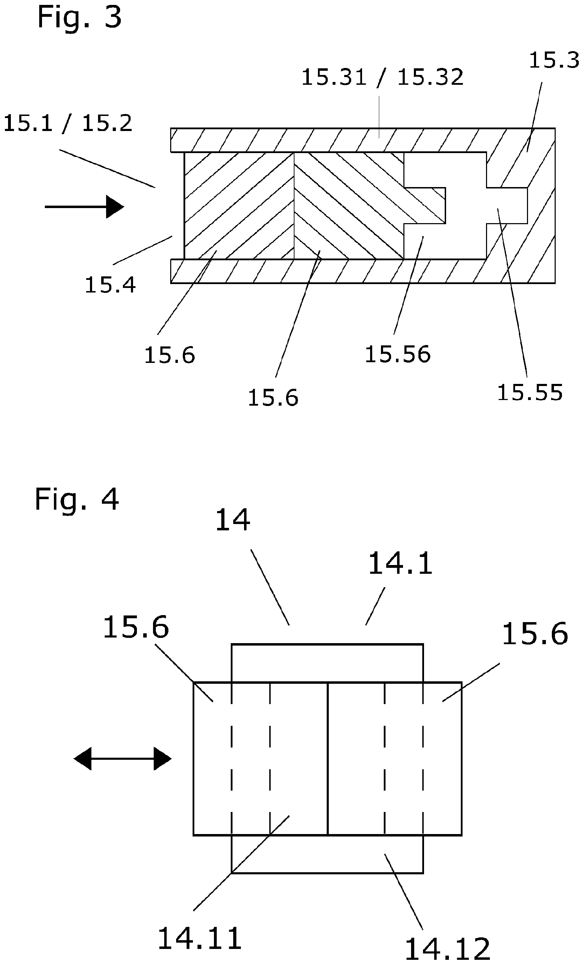

Die Halterung 15.3 weist eine U-Form mit einem ersten Ausleger 15.31, einen zweiten Ausleger 15.32 und eine die Ausleger verbindende Basis 15.33 auf. Die Halterung umgreift die Spulenvorrichtung, so dass der erste Ausleger bzgl. eines Spulenquerschnitts auf einer ersten Seite der Spulenvorrichtung 14.01 angeordnet ist, und der zweite Ausleger auf einer zweiten Seite der Spulenvorrichtung 14.02 angeordnet ist, wobei eine erste Magnetgruppe 15.1 auf der ersten Seite der Spulenvorrichtung durch die Halterung gehalten ist, und wobei eine zweite Magnetgruppe 15.2 auf der zweiten Seite der Spulenvorrichtung durch die Halterung gehalten ist. Jede Magnetgruppe kann wie hier gezeigt zwei Magnete 15.6 aufweisen, wobei die Magnete einer Magnetgruppe vorteilhafterweise unterschiedlich orientierte Magnetfelder aufweisen. Sich gegenüberliegende Magnete unterschiedlicher Magnetgruppen weisen vorteilhafterweise Magnetfelder gleicher Orientierung auf. Auf diese Weise weist ein durch die einzelnen Magnetfelder erzeugtes Gesamtmagnetfeld eine starke Inhomogenität auf. Relativbewegungen zwischen Spulenvorrichtung 14 und Halterung 15.3 führen zu einer starken Induktion elektrischer Felder in einer Spule der Spulenvorrichtung 14.01, sofern die Inhomogenität in einen Zentralbereich der Spule 14.1 fällt, siehe dazu auch Fig. 4. Um den magnetischen Fluss der Magnetfelder zu stärken, weist die Magnetgruppe neben zwei Magneten eine magnetisch leitfähige Schlussvorrichtung auf, welche dazu eingerichtet ist, Feldlinien von Magnetfeldern benachbarter Magnete einer Magnetgruppe zu schließen. Die Schlussvorrichtung ist dabei beispielsweise aus einem ferromagnetischem Material gefertigt.

Die Halterung ist bevorzugt aus einem magnetisch nicht oder nur schwach leitfähigem Material ausgebildet, wie beispielsweise Edelstahl oder Aluminium.

Die Halterung weist im Bereich der Ausleger jeweils einen Hohlraum 15.4 auf, wobei die Hohlräume zur Aufnahme der Magnetgruppen eingerichtet sind. Die Hohlräume sind jeweils durch eine Hohlraumwandung 15.5 ausgebildet, wobei die Hohlraumwandung jeweils mindestens eine erste Öffnung 15.51 zur Aufnahme einer Magnetgruppe aufweist. Jeder Ausleger kann wie beim ersten Ausleger 15.31 dargestellt eine auf einer zur Spulenvorrichtung gerichteten Seite des zugehörigen Hohlraums zweite Öffnung 15.52 aufweisen, um einen magnetischen Widerstand der Halterung zu verringern. Alternativ kann zum selben Zweck wie beim zweiten Ausleger 15.32 dargestellt, eine Wandstärke verringert sein.

Die Magnetgruppen 15.1, 15.2 sind vorteilhafterweise jeweils mittels eines Klebers im jeweiligen Hohlraum gehalten, wobei der Kleber insbesondere ein Keramikkleber ist. Ein Hinterschnitt in der Hohlraumwandung im Bereich der entsprechenden ersten Öffnung kann wie hier dargestellt dazu eingerichtet sein, einen Teil einer Klebemasse bei Einbringen der Magnetgruppen in den jeweiligen Hohlraum aufzunehmen. Nach Aushärten der Klebemasse ist die Klebemasse im Hinterschnitt verankert und sichert die Magnetgruppe, so dass sie unbeweglich im Hohlraum befindlich ist.

Des Weiteren kann die erste Öffnung 15.51 beispielsweise wie hier dargestellt mittels eines Verschlussmechanismus 15.54 verschließbar sein. Der Verschlussmechanismus kann beispielsweise ein Klappmechanismus oder Bügelmechanismus sein.

Die Halterung ist insbesondere mittels eines 3D-Druckverfahrens hergestellt. Dadurch lässt sie sich in einer kompakten und leichten Form fertigen, so dass bei Befestigung an einem Messrohr Messrohrschwingungen nur gering und nicht störend beeinflusst werden.

Die Halterung kann beispielsweise eine Bohrung zur Befestigung an einer Befestigungsvorrichtung aufweisen. Ein Fachmann wird eine Befestigungsweise gemäß seiner Anforderungen wählen.

Typische Abmessungen einer konvexen Einhüllenden der Halterung sind 15mm * 10mm * 5 mm, wobei jede Maßangabe weniger als 40% vom genannten Wert abweichen kann.

Typische Abmessungen eines Magnets sind 5mm * 3.5mm * 2mm, wobei jede Maßangabe weniger als 40% vom genannten Wert abweichen kann. Die Magnete können auch einen runden oder ovalen Querschnitt aufweisen.

Typische Abmessungen der magnetisch leitfähigen Schlussvorrichtung sind 5mm * 3.5mm * 1mm, wobei jede Maßangabe weniger als 30% vom genannten Wert abweichen kann.

Fig. 3 skizziert einen Schnitt durch einen Hohlraum mit einer darin befindlichen Magnetgruppe. Die Hohlraumwandung kann wie hier dargestellt auf einer der ersten Öffnung abgewandten Seite zumindest abschnittsweise eine erste geometrische Struktur 15.55 aufweisen, wobei eine zugehörige Magnetgruppe eine zweite geometrische Struktur 15.56 aufweisen kann, welche zumindest abschnittsweise komplementär zur ersten geometrischen Struktur ist, wobei die Magnetgruppe in montiertem Zustand dazu eingerichtet ist, mittels der zweiten geometrischen Struktur mit der ersten geometrischen Struktur passend abzuschließen. Die geometrischen Strukturen können wie hier dargestellt eine Rechteckform aufweisen. Beliebige andere Formen wie beispielsweise eine Dreieckform sind genauso verwendbar. Unter anderem eine Dreiecksform ist vorteilhaft, da bei Montage kein zielgenaues Einbringen der Magnetgruppe nötig ist, sondern ein Finden der Endposition automatisch geschieht.

Fig. 4 skizziert eine relative Positionierung einer Magnetgruppe mit zwei Magneten 15.6 bezüglich einer Spulenvorrichtung 14 mit einer Spule 14.1. Die Spule weist einen Zentralbereich 14.11 und einen den Zentralbereich umgebenden Windungsbereich auf. In einem Ruhezustand des mindestens einen Messrohrs befindet sich eine Grenze zwischen den Magneten einer Magnetgruppe projiziert auf die Querschnittsebene bevorzugt zumindest näherungsweise in einer Mitte des Zentralbereichs.

Bevorzugt weist der Zentralbereich der Spule in Richtung der durch Messrohrschwingungen verursachten Relativbewegungen eine Ausdehnung auf, welche größer ist als für das Messrohr typische Schwingungsamplituden, und welche kleiner ist als ein Zweifaches einer typischen Schwingungsamplitude.

Die Grenze zwischen den Magneten verläuft dabei bevorzugt senkrecht zur Richtung der Relativbewegung. Relativbewegungen zwischen Spule und Magnetvorrichtung bewirken dadurch eine starke Induktion elektrischer Spannungen in der Spule.

Bei einem Einrohr-Coriolis-Messaufnehmer ist die Halterung 15.3 eines Sensors bzw. Erregers bevorzugt am Messrohr angeordnet, und die Spulenvorrichtung eines Sensors bzw. Erregers mittels einer Haltevorrichtung am Trägerkörper 20.

Bei einem Zweirohr-Coriolis-Messaufnehmer ist bevorzugt die Halterung eines Sensors bzw. Erregers an einem ersten Messrohr und die Spulenvorrichtung eines Sensors bzw. Erregers an einem zweiten Messrohr befestigt.

### Bezugszeichenliste

- 1: Coriolis-Messgerät
- 10: Coriolis-Messaufnehmer
- 11: Messrohr
- 11.1: erstes Messrohr
- 11.2: zweites Messrohr
- 12: Erreger
- 13: Sensor
- 14: Spulenvorrichtung
- 14.01: erste Seite der Spulenvorrichtung
- 14.02: zweite Seite der Spulenvorrichtung
- 14.1: Spule
- 14.11: Zentralbereich
- 14.12: Windungsbereich
- 15: Magnetvorrichtung
- 15.1: erste Magnetgruppe
- 15.2: zweite Magnetgruppe
- 15.3: Halterung für Magnete
- 15.31: erster Ausleger
- 15.32: zweiter Ausleger
- 15.33: verbindende Basis
- 15.4: Hohlraum
- 15.5: Hohlraumwandung
- 15.51: erste Öffnung
- 15.52: zweite Öffnung
- 15.53: Hinterschnitt
- 15.54: Verschlussmechanismus
- 15.55: erste geometrische Struktur
- 15.56: zweite geometrische Struktur
- 15.6: Magnet
- 15.7: magnetisch leitfähige Schlussvorrichtung
- 20: Trägerkörper
- 77: elektronische Mess-/Betriebsschaltung
- 80: Elektronikgehäuse

## Patentansprüche

1. Coriolis-Messaufnehmer (10) eines Coriolis-Messgeräts (1) zum Erfassen eines Massedurchflusses oder einer Dichte eines durch mindestens ein Messrohr des Coriolis-Messgeräts strömenden Mediums, umfassend:
das mindestens eine Messrohr (11) mit einem Einlauf und einem Auslauf, welches dazu eingerichtet ist, das Medium zwischen Einlauf und Auslauf zu führen;
mindestens einen Erreger (12), welcher dazu eingerichtet ist, das mindestens eine Messrohr zu Schwingungen anzuregen;
mindestens zwei Sensoren (13), welche dazu eingerichtet sind, jeweils Schwingungen mindestens eines Messrohrs zu erfassen;
wobei mindestens ein Erreger und/oder mindestens ein Sensor jeweils eine Spulenvorrichtung (14) mit jeweils mindestens einer Spule (14.1), sowie jeweils eine Magnetvorrichtung (15) aufweisen, wobei die Magnetvorrichtung und die Spulenvorrichtung relativ zueinander bewegbar sind,
wobei der Messaufnehmer einen Trägerkörper (20) aufweist, welcher dazu eingerichtet ist, das mindestens eine Messrohr zu halten,
wobei die Magnetvorrichtung eine Halterung für Magnete (15.3) und zumindest eine erste Magnetgruppe (15.1) mit mindestens einem Magnet und zumindest eine zweite Magnetgruppe (15.2) mit mindestens einem Magnet aufweist,
wobei die Halterung eine U-Form mit einem ersten Ausleger (15.31) und einem zweiten Ausleger (15.32) und einer die Ausleger verbindenden Basis (15.33) aufweist, wobei die Halterung die Spulenvorrichtung umgreift, so dass der erste Ausleger bzgl. eines Spulenquerschnitts auf einer ersten Seite der Spulenvorrichtung (14.01) angeordnet ist, und wobei der zweite Ausleger auf einer zweiten Seite der Spulenvorrichtung (14.02) angeordnet ist,
wobei die erste Magnetgruppe auf der ersten Seite der Spulenvorrichtung durch die Halterung gehalten ist, und wobei die zweite Magnetgruppe auf der zweiten Seite der Spulenvorrichtung durch die Halterung gehalten ist,
wobei die Halterung im Bereich der Ausleger jeweils einen Hohlraum (15.4) aufweist, wobei die Hohlräume zur Aufnahme der Magnetgruppen eingerichtet sind,
wobei die Hohlräume jeweils durch eine Hohlraumwandung (15.5) ausgebildet sind, wobei die Hohlraumwandung jeweils mindestens eine erste Öffnung (15.51) zur Aufnahme einer Magnetgruppe aufweist,
**dadurch gekennzeichnet, dass**
jede Magnetgruppe zwei Magnete (15.6) und mindestens eine magnetisch leitfähige Schlussvorrichtung (15.7) aufweist,
wobei die Magnetfelder der beiden Magnete entgegengesetzt orientiert sind, und wobei die Schlussvorrichtung dazu eingerichtet ist, Feldlinien der Magnetfelder beider Magnete zu leiten und zusammenzuführen,
wobei die Magnete mit der Schlussvorrichtung mechanisch kontaktiert sind,
wobei Magnetfelder sich gegenüberstehende Magnete verschiedener Magnetgruppen gleichgerichtet sind.

2. Coriolis-Messaufnehmer nach Anspruch 1,
wobei die Magnetgruppen (15.1, 15.2) jeweils mittels eines Klebers im jeweiligen Hohlraum gehalten sind, wobei der Kleber insbesondere ein Keramikkleber ist.

3. Coriolis-Messaufnehmer nach Anspruch 2,
wobei die Hohlraumwandung im Bereich der ersten Öffnung auf einer dem jeweiligen Hohlraum zugewandten Innenseite mindestens einen Hinterschnitt (15.53) aufweist,
welcher Hinterschnitt dazu eingerichtet ist, einen Teil des Klebers aufzunehmen.

4. Coriolis-Messaufnehmer nach einem der vorigen Ansprüche,
wobei eine Wandung des Hohlraums auf einer dem jeweils anderen Ausleger zugewandte Seite des Hohlraums zumindest abschnittsweise eine erste Wandstärke aufweist, welche kleiner ist, als eine Wandstärke der Hohlraumwandung (15.5) von anderen Hohlraumseiten,
oder wobei eine Wandung des Hohlraums auf einer dem jeweils anderen Hohlraum zugewandte Seite des Hohlraums zumindest abschnittsweise eine zweite Öffnung (15.52) aufweist.

5. Coriolis-Messaufnehmer nach einem der vorigen Ansprüche,
wobei die erste Öffnung mittels eines Verschlussmechanismus (15.54) wie beispielsweise ein Klappmechanismus oder Bügelmechanismus verschließbar ist,
wobei beispielsweise eine Klappe bzw. ein Bügel ein Bestandteil der Halterung ist.

6. Coriolis-Messaufnehmer nach einem der vorigen Ansprüche,
wobei die mindestens eine Spule (14.1) einen Zentralbereich (14.11) und einen den Zentralbereich umfassenden Windungsbereich (14.12) aufweist,
wobei in einem Ruhezustand des mindestens einen Messrohrs eine Grenze zwischen den Magneten einer Magnetgruppe projiziert auf die Querschnittsebene zumindest abschnittsweise im Zentralbereich befindlich ist.

7. Coriolis-Messaufnehmer nach einem der vorigen Ansprüche,
wobei die Hohlraumwandung auf einer der ersten Öffnung abgewandten Seite zumindest abschnittsweise eine erste geometrische Struktur (15.55) aufweist, und wobei eine zugehörige Magnetgruppe eine zweite geometrische Struktur (15.56) aufweist, welche zumindest abschnittsweise komplementär zur ersten geometrischen Struktur ist,
wobei die Magnetgruppe in montiertem Zustand dazu eingerichtet ist, mittels der zweiten geometrischen Struktur mit der ersten geometrischen Struktur passend abzuschließen.

8. Coriolis-Messaufnehmer nach einem der vorigen Ansprüche,
wobei der Messaufnehmer zwei Sammler (17) aufweist, wobei ein erster Sammler (17.1) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (17.2) dazu eingerichtet ist, das aus dem Auslauf des mindestens einen Messrohrs austretende Medium aufzunehmen und in die Rohrleitung zu führen.

9. Coriolis-Messaufnehmer nach einem der vorigen Ansprüche,
wobei der Messaufnehmer ein Messrohr (11) aufweist,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper (20) befestigt sind,
oder wobei der Messaufnehmer ein Messrohrpaar aufweist, wobei die Halterung / die Spulenvorrichtung des Sensors bzw. Erregers jeweils an einem ersten Messrohr (11.1) befestigt sind, und die Spulenvorrichtung / die Halterung jeweils an einem zweiten Messrohr (11.2) befestigt sind.

10. Coriolis-Messaufnehmer nach Anspruch 9,
wobei der Messaufnehmer zwei Messrohrpaare aufweist.

11. Coriolis-Messaufnehmer nach einem der vorigen Ansprüche,
wobei die Halterung aus mindestens einem 3D-druckbaren Metall bzw. mindestens einer Metalllegierung wie beispielsweise Stahl oder Aluminium gefertigt ist.

12. Coriolis-Messgerät (1) umfassend:
Einen Coriolis-Messaufnehmer (10) nach einem der vorigen Ansprüche;
eine elektronische Mess-/Betriebsschaltung (77), welche dazu eingerichtet ist, die Sensoren und den mindestens einen Erreger zu betreiben,
wobei die Sensoren und die Erreger mittels elektrischer Verbindungen (30) mit der elektronischen Mess-Betriebsschaltung verbunden sind.
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (80) zum Behausen der elektronischen Mess-/Betriebsschaltung aufweist.

## Claims

1. Coriolis sensor (10) of a Coriolis measuring device (1) designed to measure a mass flow or a density of a medium flowing through at least a measuring tube of the Coriolis measuring device, said sensor comprising:
at least a measuring tube (11) with an inlet and an outlet, which is designed to conduct the medium between the inlet and the outlet;
at least an exciter (12), which is designed to excite the at least one measuring tube;
at least two sensors (13), which are designed to measure, respectively, the vibrations of at least one measuring tube;
wherein at least an exciter and/or at least a sensor each have a coil unit (14) each with at least a coil (14.1), and each have a magnet device (15), wherein the magnet device and the coil unit are mobile in relation to one another,
wherein the sensor has a carrier body (20), which is designed to hold the at least one measuring tube,
wherein the magnet device has a holder for magnets (15.3) and at least a first magnet group (15.1) with at least one magnet and at least a second magnet group (15.2) with at least a magnet,
wherein the holder has a U-shape with a first leg (15.31) and a second leg (15.32), and a base (15.33) connecting the legs, wherein the holder surrounds the coil unit in such a way that the first leg is arranged on a first side of the coil unit (14.01) in relation to a coil cross-section, and the second leg is arranged on a second side of the coil unit (14.02),
wherein the first magnet group is held on the first side of the coil unit by the holder, and the second magnet group is held on the second side of the coil unit by the holder,
wherein the holder has a cavity (15.4) in the area of the legs, wherein the cavities are designed to receive the magnet groups,
wherein the cavities are formed, respectively, by a cavity wall (15.5), wherein the cavity wall each has at least a first opening (15.51) to receive a magnet group,
**characterized in that**
each magnet group has two magnets (15.6) and at least a magnetically conductive closing unit (15.7),
wherein the magnetic fields of the two magnets are oriented in an opposite manner, and the closing unit is designed to guide and connect field lines of the magnetic fields of the two magnets,
wherein the magnets are in mechanical contact with the closing unit,
wherein magnetic fields of opposing magnets of different magnet groups are oriented in the same direction.

2. Coriolis sensor as claimed in Claim 1,
wherein the magnet groups (15.1, 15.2) are each held in the respective cavity by an adhesive, wherein the adhesive is particularly a ceramic adhesive.

3. Coriolis sensor as claimed in Claim 2,
wherein the cavity wall has at least an under-cut (15.53) in the area of the first opening on an interior side facing towards the respective cavity,
wherein the under-cut is designed to receive some of the adhesive.

4. Coriolis sensor as claimed in one of the previous claims,
wherein a cavity wall on a side of the cavity facing towards the other respective leg has a first wall thickness at least in sections which is less than a wall thickness of the cavity wall (15.5) of other sides of the cavity,
or wherein a wall of the cavity on a side of the cavity facing towards the other respective cavity has a second opening (15.52) at least in sections.

5. Coriolis sensor as claimed in one of the previous claims,
wherein the first opening can be closed by a closing mechanism (15.54), such as a flap mechanism or bracket mechanism,
wherein a flap or a bracket is an integral part of the holder.

6. Coriolis sensor as claimed in one of the previous claims,
wherein the at least one coil (14.1) has a central area (14.11) and a winding area (14.12) surrounding the central area,
wherein, in a state of rest of the at least one measuring tube, a limit between the magnets of a magnet group, projected onto the cross-sectional plane, is located at least in sections in the central area.

7. Coriolis sensor as claimed in one of the previous claims,
wherein the cavity wall has, at least in sections, a first geometric structure (15.55) on a side facing away from the first opening, and wherein an associated magnet group has a second geometric structure (15.56), which is complementary to the first geometric structure at least in sections,
wherein, when mounted, the magnet group is designed to fit, at its end, to the first geometric structure by means of the second geometric structure.

8. Coriolis sensor as claimed in one of the previous claims,
wherein the sensor has two collectors (17), wherein a first collector (17.1) on an upstream side of the sensor is designed to collect a medium flowing out of a pipe and into the sensor and to conduct it to the inlet of the at least one measuring tube,
wherein a second collector (17.2) is designed to collect the medium leaving the outlet of the at least one measuring tube and to conduct it into the pipe.

9. Coriolis sensor as claimed in one of the previous claims,
wherein the sensor has a measuring tube (11),
wherein the holder / the coil unit of the sensor or exciter are secured to the measuring tube,
and wherein the coil unit / the holder of the sensor or the exciter is secured to the carrier body (20),
or wherein the sensor has a measuring tube pair, wherein the holder / the coil unit of the sensor or the exciter is secured in each case on a first measuring tube (11.1), and the coil unit / the holder are secured in each case on a second measuring tube (11.2).

10. Coriolis sensor as claimed in Claim 9,
wherein the sensor has two measuring tube pairs.

11. Coriolis sensor as claimed in one of the previous claims,
wherein the holder is made at least from a 3D printable metal or at least a metal alloy such as steel or aluminum.

12. Coriolis measuring device (1) comprising:
a Coriolis sensor (10) as claimed in one of the previous claims;
an electronic measuring/operating circuit (77), which is designed to operate the sensors and the at least one exciter,
wherein the sensors and the exciters are connected to the electronic measuring/operating circuit using electrical connections (30),
wherein the electronic measuring/operating circuit is further designed to determine and provide flow measured values and/or density measured values,
wherein the measuring device particularly has an electronics housing (80) to house the electronic measuring/operating circuit.

## Revendications

1. Débitmètre Coriolis (10) d'un appareil de mesure à effet Coriolis (1) destiné à la mesure d'un débit massique ou une densité d'un produit s'écoulant à travers au moins un tube de mesure de l'appareil de mesure à effet Coriolis, lequel débitmètre comprend :
au moins un tube de mesure (11) avec une entrée et une sortie, lequel tube est conçu pour guider le produit entre l'entrée et la sortie ;
au moins un excitateur (12), lequel est conçu pour faire vibrer l'au moins un tube de mesure ;
au moins deux capteurs (13), lesquels sont conçus pour mesurer respectivement les vibrations d'au moins un tube de mesure ;
au moins un excitateur et/ou au moins un capteur présentant respectivement un dispositif à bobine (14) avec respectivement au moins une bobine (14.1), ainsi que respectivement un dispositif à aimants (15), le dispositif à aimants et le dispositif à bobine étant mobiles l'un par rapport à l'autre,
le débitmètre présentant un corps de support (20), lequel est conçu pour maintenir l'au moins un tube de mesure,
le dispositif à aimants comprenant un support pour des aimants (15.3) et au moins un premier groupe d'aimants (15.1) avec au moins un aimant et au moins un deuxième groupe d'aimants (15.2) avec au moins un aimant,
le support présentant une forme en U avec un premier bras (15.31) et un deuxième bras (15.32), ainsi qu'une base (15.33) reliant les bras, le support entourant le dispositif à bobine, de sorte que le premier bras est disposé sur un premier côté du dispositif à bobine (14.01) par rapport à une section transversale de bobine, et le deuxième bras est disposé sur un deuxième côté du dispositif à bobine (14.02),
le premier groupe d'aimants étant maintenu sur le premier côté du dispositif à bobine par le support, et le deuxième groupe d'aimants étant maintenu sur le deuxième côté du dispositif à bobine par le support,
le support présentant respectivement une cavité (15.4) dans la zone des bras, les cavités étant aménagées pour recevoir les groupes d'aimants,
les cavités étant formées respectivement par une paroi de cavité (15.5), la paroi de cavité présentant respectivement au moins une première ouverture (15.51) pour recevoir un groupe d'aimants,
**caractérisé en ce que**
chaque groupe d'aimants présente deux aimants (15.6) et au moins un dispositif de fermeture magnétiquement conducteur (15.7),
les champs magnétiques des deux aimants étant orientés de manière opposée, et le dispositif de fermeture étant conçu pour guider et réunir les lignes de champ des champs magnétiques des deux aimants,
les aimants étant en contact mécanique avec le dispositif de fermeture,
les champs magnétiques d'aimants opposés de différents groupes d'aimants étant orientés dans le même sens.

2. Débitmètre Coriolis selon la revendication 1,
pour lequel les groupes d'aimants (15.1, 15.2) sont maintenus chacun dans la cavité respective au moyen d'une colle, la colle étant notamment une colle céramique.

3. Débitmètre Coriolis selon la revendication 2,
pour lequel la paroi de la cavité présente au moins une contre-dépouille (15.53) dans la zone de la première ouverture sur un côté intérieur tourné vers la cavité respective,
laquelle contre-dépouille est conçue pour recevoir une partie de la colle.

4. Débitmètre Coriolis selon l'une des revendications précédentes,
pour lequel une paroi de la cavité sur un côté de la cavité tourné vers l'autre bras respectif présente au moins par sections une première épaisseur de paroi qui est inférieure à une épaisseur de paroi de la paroi de cavité (15.5) des autres côtés de la cavité,
ou pour lequel une paroi de la cavité présente, sur un côté de la cavité tourné vers l'autre cavité respective, au moins par sections, une deuxième ouverture (15.52).

5. Débitmètre Coriolis selon l'une des revendications précédentes,
pour lequel la première ouverture peut être fermée au moyen d'un mécanisme de fermeture (15.54), tel qu'un mécanisme à volet ou à étrier,
un volet ou un étrier faisant par exemple partie intégrante du support.

6. Débitmètre Coriolis selon l'une des revendications précédentes,
pour lequel l'au moins une bobine (14.1) présente une zone centrale (14.11) et une zone d'enroulement (14.12) entourant la zone centrale,
pour lequel, dans un état de repos de l'au moins un tube de mesure, une limite entre les aimants d'un groupe d'aimants, projetée sur le plan de la section transversale, se trouve au moins par sections dans la zone centrale.

7. Débitmètre Coriolis selon l'une des revendications précédentes,
pour lequel la paroi de la cavité présente au moins par sections une première structure géométrique (15.55) sur un côté opposé à la première ouverture, et pour lequel un groupe d'aimants associé présente une deuxième structure géométrique (15.56), laquelle est au moins par sections complémentaire à la première structure géométrique,
le groupe d'aimants étant conçu, à l'état monté, de telle sorte à être adapté, au niveau de son extrémité, à la première structure géométrique au moyen de la deuxième structure géométrique.

8. Débitmètre Coriolis selon l'une des revendications précédentes,
lequel débitmètre comporte deux collecteurs (17), un premier collecteur (17.1) étant agencé sur un côté amont du débitmètre pour recevoir un produit entrant dans le débitmètre à partir d'une conduite et pour le diriger vers l'entrée de l'au moins un tube de mesure,
un deuxième collecteur (17.2) étant conçu pour recevoir le produit sortant de l'au moins un tube de mesure et le diriger dans la conduite.

9. Débitmètre Coriolis selon l'une des revendications précédentes,
lequel débitmètre présente un tube de mesure (11),
le support / le dispositif à bobine du capteur ou de l'excitateur étant respectivement fixé au tube de mesure,
et le dispositif à bobine / le support du capteur ou de l'excitateur étant respectivement fixé au corps de support (20),
ou le débitmètre présentant une paire de tubes de mesure, le support / le dispositif à bobine du capteur ou de l'excitateur étant fixé respectivement à un premier tube de mesure (11.1), et le dispositif à bobine / le support étant fixé respectivement à un deuxième tube de mesure (11.2).

10. Débitmètre Coriolis selon la revendication 9,
lequel débitmètre comprend deux paires de tubes de mesure.

11. Débitmètre Coriolis selon l'une des revendications précédentes,
pour lequel le support est fabriqué à partir d'au moins un métal ou alliage métallique imprimable en 3D, comme par exemple de l'acier ou de l'aluminium.

12. Débitmètre Coriolis comprenant :
un débitmètre Coriolis (10) selon l'une des revendications précédentes ;
un circuit électronique de mesure/d'exploitation (77), lequel est conçu pour exploiter les capteurs et l'au moins un excitateur,
les capteurs et les excitateurs étant connectés au circuit électronique de mesure et d'exploitation au moyen de connexions électriques (30),
le circuit électronique de mesure/d'exploitation étant en outre conçu pour déterminer et mettre à disposition des valeurs de mesure de débit et/ou de densité,
l'appareil de mesure comprenant notamment un boîtier électronique (80) pour loger le circuit électronique de mesure/d'exploitation.
